# EUROPEAN PATENT APPLICATION

(11) **EP 3 786 704 A1**
(43) Date of publication of application: **03.03.2021**
(21) Application number: 19792470.7
(22) Date of filing: 23.04.2019
(51) Int. Cl.: G02F 1/377

(54) **WAVELENGTH CONVERSION OPTICAL DEVICE AND METHOD FOR MANUFACTURING WAVELENGTH CONVERSION OPTICAL DEVICE**

(30) Priority: 26.04.2018 JP 2018085055
(71) Applicant: SUMITOMO ELECTRIC INDUSTRIES, LTD., Osaka-shi, Osaka 541-0041 (JP)
(72) Inventor: NAGANO, Shigehiro, Osaka-shi, Osaka 541-0041 (JP)
(74) Representative: Hoffmann Eitle
(86) International application number: PCT/JP2019/017277
(87) International publication number: WO 2019/208582

(57) **Abstract**

A wavelength conversion optical device includes: a substrate having a virtual plane including a virtual axis and first and second regions facing each other with the virtual plane interposed therebetween and including multiple first crystal regions and multiple second crystal regions alternately arranged on the virtual axis, in which each of the multiple first crystal regions includes a pair of portions arranged in a direction intersecting a first plane with the first plane interposed therebetween, the first plane being located in the first region and being parallel to the virtual plane, and directions of spontaneous polarizations of each of the pair of portions being directions away from the first plane, and each of the multiple second crystal regions includes a pair of portions arranged in a direction intersecting a second plane with the second plane interposed therebetween, the second plane being located in the second region and being parallel to the virtual plane, and directions of spontaneous polarizations of each of the pair of portions being directions away from the second plane.

## Description

### Cross-Reference to Related Applications

One aspect of the present disclosure relates to a wavelength conversion optical device and a method for manufacturing the wavelength conversion optical device.

The present application claims the priority based on Japanese Patent Application No. 2018-085055 filed on April 26, 2018, the entire contents of which are incorporated herein.

### Background Art

Materials used for optical devices that utilize a second-order nonlinear optical phenomenon primarily include ferroelectric optical crystals such as a LiNbO₃ (LN) crystal, a KTiOPO₄ (KTP) crystal, a LiB₃O₅ (LBO) crystal, or a β-BaB₂O₄ (BBO) crystal. Optical devices utilizing these crystals have been developed in a wide range of application fields with wavelength conversion as a primary application. In the field of laser processing, for example, optical devices utilizing these crystals are shortened in wavelength using a second harmonic generation (SHG) of an optical fiber laser. The optical device using these crystals enables fine processing because it can perform selective processing using absorption wavelength dependence of the material and can reduce a beam spot diameter. In the field of optical communication, optical devices utilizing these crystals are used as optical wavelength conversion devices that perform simultaneous wavelength conversion from C-band WDM signals to L-band signals in order for effective utilization of wavelength resources in wavelength division multiplexing (WDM) optical communication. In the field of measurement, attention is paid to terahertz spectroscopy, which allows observation of intermolecular vibrations caused by hydrogen bonding and the like, and optical devices utilizing these crystals are used as light sources generating terahertz light.

Recently, compound semiconductor crystals such as GaAs, GaP, GaN, CdTe, ZnSe, or ZnO have also been used as materials for optical device utilizing the second-order nonlinear optical phenomenon. These materials have attracted attention as materials for a second-order nonlinear device due to a remarkable progress in techniques of fabricating a periodically spatially-poled structure, which is essential for the second-order nonlinear optical device in addition to having a large second-order nonlinear optical constant.

Wavelength conversion manners can be classified into angular phase matching and quasi phase matching (QPM) by periodically-poling. Among these, the quasi phase matching enables generation of various phase matching wavelengths and wavelength conversion in all transparent regions of a material by properly designing a poling pitch. In addition, in the quasi phase matching, there is no walk-off angle due to the angular phase matching. Therefore, a beam quality is good and an interaction length can be lengthened. The quasi phase matching is suitable for efficiency improvement and suppression of coupling loss, and is an effective manner in processing and measurement.

### Citation List

### Patent Literature

Patent Literature 1: PCT International Application Publication No. 2017/110792

### Summary of Invention

A wavelength conversion optical device according to one embodiment includes: a substrate having a virtual plane including a virtual axis and first and second regions facing each other with the virtual plane interposed therebetween and including multiple first crystal regions and multiple second crystal regions alternately arranged on the virtual axis, in which each of the multiple first crystal regions includes a pair of portions arranged in a direction intersecting a first plane with the first plane interposed therebetween, the first plane being located in the first region and being parallel to the virtual plane, and directions of spontaneous polarizations of each of the pair of portions being directions away from the first plane, and each of the multiple second crystal regions includes a pair of portions arranged in a direction intersecting a second plane with the second plane interposed therebetween, the second plane being located in the second region and being parallel to the virtual plane, and directions of spontaneous polarizations of each of the pair of portions being directions away from the second plane.

In addition, a method for manufacturing a wavelength conversion optical device according to one embodiment includes: a first step of forming multiple first crystal regions by irradiating a substrate with laser light, the substrate having a virtual plane including a virtual axis and first and second regions facing each other with the virtual plane interposed therebetween, the laser light having a wavelength included in an absorption wavelength band of the substrate and having a light intensity distribution that gradually decreases as a distance from a plane including a central axial line of the laser light increases, the multiple first crystal regions each including a pair of portions arranged in a direction intersecting a first plane with the first plane interposed therebetween, the first plane being in the first region and being parallel to the virtual plane, and directions of spontaneous polarizations of each of the pair of portions being directions away from the first plane; and a second step of forming multiple second crystal regions by irradiating the substrate with the laser light, the multiple second crystal regions each including a pair of portions arranged in a direction intersecting a second plane with the second plane interposed therebetween, the second plane being in the second region and being parallel to the virtual plane, and directions of spontaneous polarizations of each of the pair of portions being directions away from the second plane, in which the multiple first crystal regions and the multiple second crystal regions are alternately formed on the virtual axis.

### Brief Description of Drawings

FIG. 1 is a cross-sectional view illustrating a structure of a wavelength conversion optical device 1A according to one embodiment of the present disclosure.
FIG. 2 is an enlarged view of a crystal region 10A.
FIG. 3 is an enlarged view of a crystal region 10B.
FIG. 4 is a flowchart illustrating a method for manufacturing the wavelength conversion optical device 1A.
FIG. 5 is a view illustrating a plurality of central planes P1 and a plurality of central planes P2.
FIG. 6A is a view illustrating a light intensity distribution of laser light used in Step S5.
FIG. 6B is a view illustrating a light intensity distribution of laser light used in Step S5.
FIG. 6C is a view illustrating a light intensity distribution of laser light used in Step S5.
FIG. 6D is a view illustrating a light intensity distribution of laser light used in Step S5.
FIG. 7 is a view illustrating graphs regarding a temperature change of a substrate 2 and an annular crystal region 100 formed by the graphs.
FIG. 8 is a cross-sectional view illustrating a configuration of a wavelength conversion optical device 1B according to a first modification of the above-described embodiment and graphs illustrating an electric field distribution that can effectively perform wavelength conversion in wavelength conversion regions B1 and B2.
FIG. 9A is a plan view illustrating a configuration of a wavelength conversion optical device 1C according to a second modification.
FIG. 9B is a cross-sectional view taken along line XIIIb-XIIIb of FIG. 9A.
FIG. 9C is a cross-sectional view taken along line XIIIc-XIIIc of FIG. 9A.
FIG. 10 is a cross-sectional view illustrating one step of a method for manufacturing a wavelength conversion optical device according to a third modification.

### Description of Embodiments

### [Problems to Be Solved by the Present Disclosure]

As a wavelength conversion optical device that performs quasi phase matching, a wavelength conversion optical device obtained by a combination of molding-in-place of glass and wavelength conversion has been proposed (see, for example, Patent Literature 1). Advantages of such a wavelength conversion optical device are a point that it is possible to process the glass into various shapes such as a fiber form and a thin film form since a substrate material is the glass and a point that a wavelength conversion function can be imparted to the shape. Patent Literature 1 discloses a method for forming a polarization-ordered structure defined in a polarization direction by irradiating a laser in a state of applying an electric field.

However, the polarization-ordered structure for realizing quasi phase matching is fine, and an interval between adjacent polarization-ordered structures is extremely short. Therefore, an interval between a positive electrode and a negative electrode configured to apply the electric field becomes narrow, and thus, manufacturing steps may be complicated in order to avoid dielectric breakdown when a high voltage is applied.

An object of the present disclosure is to provide a wavelength conversion optical device and method for manufacturing the wavelength conversion optical device capable of forming a polarization-ordered structure for realizing quasi phase matching by a simple method.

### [Effect of the Present Disclosure]

According to the wavelength conversion optical device and the method for manufacturing the wavelength conversion optical device according to the present disclosure, it is possible to form the polarization-ordered structure for realizing the quasi phase matching by a simple method.

### [Description of Embodiments]

First, contents of embodiments of the present disclosure will be listed and described. A wavelength conversion optical device according to one embodiment includes: a substrate having a virtual plane including a virtual axis and first and second regions facing each other with the virtual plane interposed therebetween and including multiple first crystal regions and multiple second crystal regions alternately arranged on the virtual axis, in which each of the multiple first crystal regions includes a pair of portions arranged in a direction intersecting a first plane with the first plane interposed therebetween, the first plane being located in the first region and being parallel to the virtual plane, and directions of spontaneous polarizations of each of the pair of portions being directions away from the first plane, and each of the multiple second crystal regions includes a pair of portions arranged in a direction intersecting a second plane with the second plane interposed therebetween, the second plane being located in the second region and being parallel to the virtual plane, and directions of spontaneous polarizations of each of the pair of portions being directions away from the second plane.

In the wavelength conversion optical device, one portions of the multiple first crystal regions and one portions of the multiple second crystal regions are alternately arranged on the virtual axis. A direction of spontaneous polarizations in the one portion of the first crystal region is a direction away from the first plane located in one of the first region and the second region (hereinafter, collectively referred to as "a pair of regions"). In addition, a direction of spontaneous polarizations in the one portion of the second crystal region is a direction away from the second plane located in the other of the pair of regions. Further, the first and second planes extend along the virtual plane. Accordingly, polarization orientations that intersect the virtual axis and are opposite to each other appear alternately on the virtual axis. Therefore, quasi phase matching by periodically-poling can be performed on light propagating on the virtual axis. In addition, each of the crystal regions of the wavelength conversion optical device can be easily formed by irradiating the substrate with laser light having a wavelength included in an absorption wavelength of the substrate. That is, according to the wavelength conversion optical device, a polarization-ordered structure for realizing quasi phase matching can be formed by a simple method.

In addition, a method for manufacturing a wavelength conversion optical device according to one embodiment includes: a first step of forming multiple first crystal regions by irradiating a substrate with laser light, the substrate having a virtual plane including a virtual axis and first and second regions facing each other with the virtual plane interposed therebetween, the laser light having a wavelength included in an absorption wavelength band of the substrate and having a light intensity distribution that gradually decreases as a distance from a plane including a central axial line of the laser light increases, the multiple first crystal regions each including a pair of portions arranged in a direction intersecting a first plane with the first plane interposed therebetween, the first plane being in the first region and being parallel to the virtual plane, and directions of spontaneous polarizations of each of the pair of portions being directions away from the first plane; and a second step of forming multiple second crystal regions by irradiating the substrate with the laser light, the multiple second crystal regions each including a pair of portions arranged in a direction intersecting a second plane with the second plane interposed therebetween, the second plane being in the second region and being parallel to the virtual plane, and directions of spontaneous polarizations of each of the pair of portions being directions away from the second plane, in which the multiple first crystal regions and the multiple second crystal regions are alternately formed on the virtual axis.

In the method for manufacturing a wavelength conversion optical device, one portions of the multiple first crystal regions and one portions of the multiple second crystal regions are alternately arranged on the virtual axis. A direction of spontaneous polarizations in the one portion of the first crystal region is a direction away from the first plane located in one of the pair of regions. In addition, a direction of spontaneous polarizations in the one portion of the second crystal region is a direction away from the second plane located in the other of the pair of regions. Further, the first and second planes extend along the virtual plane. Accordingly, polarization orientations that intersect the virtual axis and are opposite to each other appear alternately on the virtual axis. Therefore, quasi phase matching by periodically-poling can be performed on light propagating on the virtual axis. In addition, in the method for manufacturing a wavelength conversion optical device, each of the crystal regions is easily formed by irradiating the substrate with laser light having a wavelength included in an absorption wavelength of the substrate. At this time, the substrate is irradiated with the laser light having the light intensity distribution that gradually decreases as the distance from the plane along the central axial line of the laser light increases. According to the method for manufacturing a wavelength conversion optical device, the directions of the spontaneous polarizations of each crystal region can be easily set to the directions away from the first and second planes, respectively. That is, according to the method for manufacturing wavelength conversion optical device, a polarization-ordered structure for realizing quasi phase matching can be formed by a simple method.

In the above-described wavelength conversion optical device, the substrate may have the channel optical waveguide structure having the virtual axis as an optical axis. Similarly, the method for manufacturing a wavelength conversion optical device may further include a step of forming a channel optical waveguide structure having the virtual axis as an optical axis on the substrate, before or after the first step and the second step. As a result, the light propagation efficiency on the virtual axis can be enhanced. In this case, the channel optical waveguide structure may be formed by a dicing saw or dry etching. As a result, it is possible to easily form the channel optical waveguide structure on the substrate made of a crystalline material or an amorphous material.

The substrate may include at least one of a fresnoite-type crystal (specific examples; Sr₂TiSi₂O₈ and Ba₂TiGe₂O₈), a BaO-TiO₂-GeO₂-SiO₂-based glass, and a SrO-TiO₂-SiO₂-based glass. For example, the above-described polarization-ordered structure can be easily formed by the irradiation of the laser light in these substrates. In this case, the substrate may include at least one of the BaO-TiO₂-GeO₂-SiO₂-based glass and the SrO-TiO₂-SiO₂-based glass, and may contain, as an additive, metal included in any group of lanthanoids, actinides, and Groups 4 to 12. As a result, the absorption of the laser light in the substrate can be enhanced, and the above-described polarization-ordered structure can be formed more efficiently.

In the method for manufacturing a wavelength conversion optical device described above, a CO₂ laser, a Yb-doped fiber laser, or a Ti:S laser may be used as a light source of the laser light. Alternatively, light obtained by converting a wavelength of light output from the CO₂ laser, the Yb-doped fiber laser, or the Ti:S laser may be used as the laser light. With any one of these, the substrate can be irradiated with laser light in an infrared region included in absorption wavelengths of many substrates with a relatively high light intensity.

In the method for manufacturing a wavelength conversion optical device described above, a light-absorbing material may be arranged on a surface of the substrate and the substrate may be irradiated with the laser light. As a result, the absorption of the laser light in the substrate can be enhanced, and the above-described polarization-ordered structure can be formed more efficiently. In this case, the light-absorbing material may be a carbon paste. As a result, the light-absorbing material that efficiently absorbs the laser light can be easily arranged on the substrate.

In the method for manufacturing a wavelength conversion optical device described above, the substrate may be irradiated with the laser light through an optical component converting a light intensity distribution of the laser light into the light intensity distribution that gradually decreases as the distance from the plane including the central axial line of the laser light increases. As a result, the above-mentioned light intensity distribution can be realized with a simple configuration. The optical component is, for example, a diffractive optical element or an aspheric lens.

### [Details of Embodiments]

Specific examples of the wavelength conversion optical device and the method for manufacturing the wavelength conversion optical device according to embodiments of the present disclosure will be described below with reference to the drawings. Incidentally, the present invention is not limited to these examples, but is illustrated by the claims, and equivalence of and all modifications within the scope of the claims are intended to be included therein. In the following description, the same elements in the description of the drawings will be denoted by the same reference signs, and redundant descriptions will be omitted.

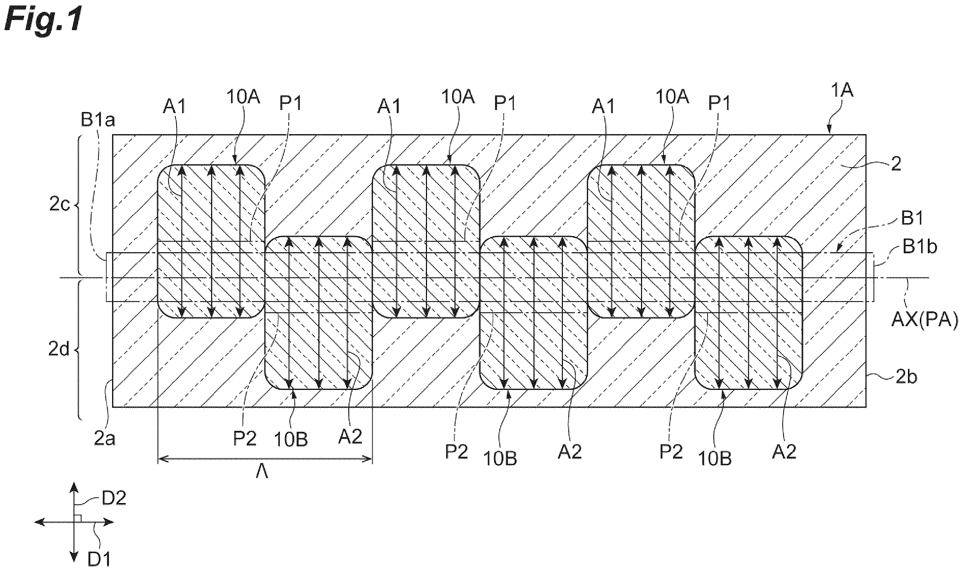

FIG. 1 is a cross-sectional view illustrating a structure of a wavelength conversion optical device 1A according to one embodiment of the present disclosure, and illustrates a cross section of the wavelength conversion optical device 1A along an optical waveguide direction D1. As illustrated in FIG. 1, the wavelength conversion optical device 1A according to the present embodiment includes a substrate 2 made of a crystalline material or an amorphous material. The substrate 2 is a substrate having a flat plate face, and has a pair of end faces 2a and 2b opposing each other in the optical waveguide direction D1. In FIG. 1, the plate face of the substrate 2 is parallel to a paper face. The end faces 2a and 2b are orthogonal to the optical waveguide direction D1 and are parallel to each other. The substrate 2 has a property of transmitting at least light of a predetermined wavelength. The predetermined wavelength is, for example, a wavelength in a range of 400 nm to 2100 nm or 9 µm to 11 µm. Examples of a constituent material of the substrate 2 include at least one of a fresnoite-type crystal, a BaO-TiO₂-GeO₂-SiO₂-based glass, and a SrO-TiO₂-SiO₂-based glass.

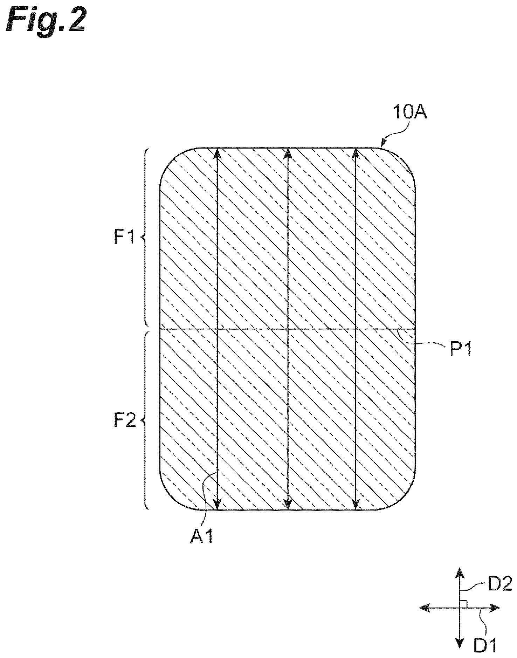

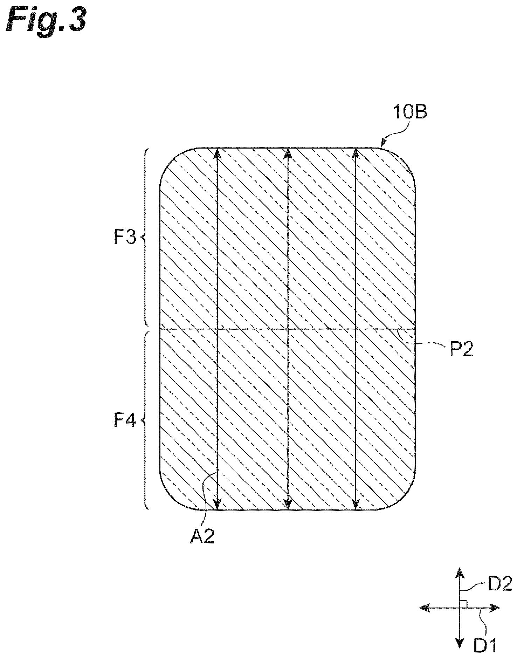

The substrate 2 includes multiple crystal regions 10A (first crystal regions) having a substantially rectangular planar shape and multiple crystal regions 10B (second crystal regions) having a substantially rectangular planar shape. FIG. 2 is an enlarged view of the crystal region 10A. FIG. 3 is an enlarged view of the crystal region 10B. The crystal regions 10A and 10B are regions having a predetermined polarization-ordered structure. The polarization-ordered structure refers to a structure in which spontaneous polarizations are oriented in a certain mode.

As illustrated in FIG. 2, each crystal region 10A includes a pair of portions F1 and F2 arranged in a direction intersecting a certain central plane P1 (first plane) with the central plane P1 interposed therebetween. In the present embodiment, the central plane P1 extends along the optical waveguide direction D1 and a depth direction of the substrate 2, and the portions F1 and F2 are arranged along a direction D2. The direction D2 is a direction along the plate face of the substrate 2 and intersecting the optical waveguide direction D1. The direction D2 may be orthogonal to the optical waveguide direction D1. In one example, each crystal region 10A is divided into the pair of portions F1 and F2 by the central plane P1. One ends of the portions F1 and F2 in the direction D2 are in contact with the central plane P1, and the other ends of the portions F1 and F2 in the direction D2 form one end and the other end of the crystal region 10A in the same direction, respectively. Inside the portions F1 and F2, spontaneous polarizations A1 extend from the central plane P1 as a starting point in a direction intersecting the central plane P1. Directions of the spontaneous polarizations A1 are directions away from the central plane P1. That is, directions of the spontaneous polarization A1 included in the portion F1 and the spontaneous polarization A1 included in the portion F2 are opposite directions. The spontaneous polarization A1 included in the portion F1 is directed from one end of the portion F1 adjacent to the central plane P1 to the other end of the portion F1. The spontaneous polarization A1 included in the portion F2 is directed from one end of the portion F2 adjacent to the central plane P1 to the other end of the portion F2.

As illustrated in FIG. 3, each crystal region 10B includes a pair of portions F3 and F4 arranged in a direction intersecting a certain central plane P2 (second plane) with the central plane P2 interposed therebetween. In the present embodiment, the central plane P2 extends along the optical waveguide direction D1 and the depth direction of the substrate 2, and the portions F3 and F4 are arranged along a direction D2. In one example, each crystal region 10B is divided into the pair of portions F3 and F4 by the central plane P2. One ends of the portions F3 and F4 in the direction D2 are in contact with the central plane P2, and the other ends of the portions F3 and F4 in the direction D2 form one end and the other end of the crystal region 10B in the same direction, respectively. Inside the portions F3 and F4, spontaneous polarizations A2 extend from the central plane P2 as a starting point in a direction intersecting the central plane P2. Directions of the spontaneous polarizations A2 are directions away from the central plane P2. That is, directions of the spontaneous polarization A2 included in the portion F3 and the spontaneous polarization A2 included in the portion F4 are opposite directions. The spontaneous polarization A2 included in the portion F3 is directed from one end of the portion F3 adjacent to the central plane P2 to the other end of the portion F3. The spontaneous polarization A2 included in the portion F4 is directed from one end of the portion F4 adjacent to the central plane P2 to the other end of the portion F4.

As described later, the above-described polarization-ordered structure in the crystal regions 10A and 10B is formed by irradiating the substrate 2 with laser light in an infrared region. When the substrate 2 includes at least one of the BaO-TiO₂-GeO₂-SiO₂-based glass and the SrO-TiO₂-SiO₂-based glass, the substrate 2 may contain metal included in any group of lanthanoids, actinoids, and Groups 4 to 12 as an additive in order to enhance absorption of laser light having a specific wavelength in the infrared region. Examples of the lanthanoid-based or actinoid-based metal include Yb, Tm, and Er. In addition, examples of metal belonging to Group 4 to Group 12 include Ti, Cr, and Zn.

A description will be provided with reference to FIG 1 again. A virtual axis AX is an axial line extending along the optical waveguide direction D1. Assuming a virtual plane PA including the virtual axis AX and extending in the depth direction of the substrate 2, the substrate 2 has a pair of regions 2c and 2d interposing the virtual plane PA therebetween. The central planes P1 of the multiple crystal regions 10A are located in one region 2c, and are arranged in a line at equal intervals along the virtual plane PA. In addition, the central planes P2 of the multiple crystal regions 10B are located in the other region 2d, and are arranged in a line at equal intervals along the virtual plane PA. In other words, each central plane P1 is included in one plane existing in the region 2c and extending along the virtual plane PA, and each central plane P2 is included in another plane existing in the region 2d and extending along the virtual plane PA. In one example, these planes are parallel to the virtual plane PA. Distances between the plurality of central planes P1 and the virtual plane PA are equal, and distances between the plurality of central planes P2 and the virtual plane PA are equal. In addition, a distance between the central plane P1 and the virtual plane PA and a distance between the central plane P2 and the virtual plane PA are equal to each other.

In addition, the central planes P1 of the multiple crystal regions 10A and the central planes P2 of the multiple crystal regions 10B are alternately arranged in an extending direction of the virtual axis AX (that is, the optical waveguide direction D1). In other words, the central planes P1 and the central planes P2 are alternately arranged when viewed from the direction D2. However, respective end portions of the central planes P1 and P2 adjacent to each other when viewed in the direction D2 may overlap each other or may be separated from each other. In an example illustrated in FIG. 1, positions of ends of the central planes P1 and P2 adjacent to each other when viewed from the direction D2 substantially coincide with each other.

Further, the portion F2 (see FIG. 2) of each crystal region 10A protrudes to the region 2d side across the virtual plane PA. That is, the portion F2 of each crystal region 10A overlaps the virtual plane PA. In addition, the portion F3 (see FIG. 3) of each crystal region 10B protrudes to the region 2c side across the virtual plane PA. That is, the portion F3 of each crystal region 10B overlaps the virtual plane PA. Therefore, the portions F2 of the multiple crystal regions 10A and the portions F3 of the multiple crystal regions 10B are alternately arranged on the virtual axis AX.

In the wavelength conversion optical device 1A having the above-described structure, a wavelength conversion region B1 is formed inside the substrate 2. The wavelength conversion region B1 is an optical waveguide that extends along the optical waveguide direction D1 with the virtual axis AX as the optical axis. One end B1a of the wavelength conversion region B1 reaches the end plane 2a of the substrate 2, and the other end B1b of the wavelength conversion region B1 reaches the end face 2b of the substrate 2. Light of a predetermined wavelength incident from the one end B1a propagates inside the wavelength conversion region B1 and is emitted from the other end B1b.

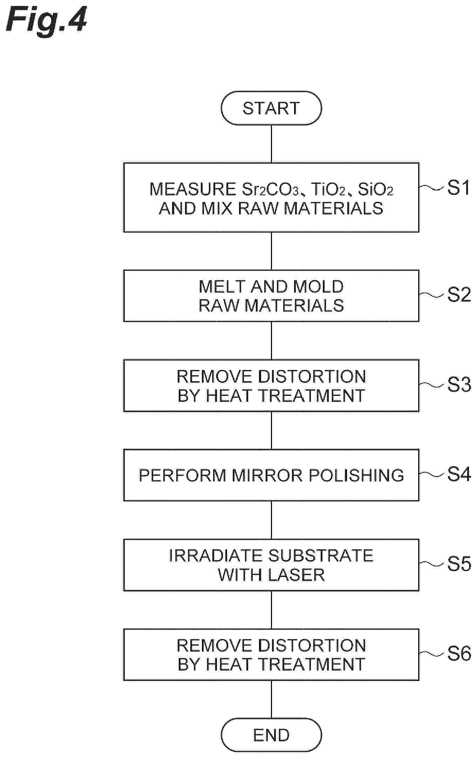

A method for manufacturing the wavelength conversion optical device 1A of the present embodiment having the structure described above will be described. FIG. 4 is a flowchart illustrating an example of the method for manufacturing the wavelength conversion optical device 1A. First, raw materials (Sr₂CO₃, TiO₂, and SiO₂ in the case of the SrO-TiO₂-SiO₂-based glass) of the substrate 2 are measured, and then mixed (Step S1). If necessary, the above-described metal that enhances absorption of laser light may be added to the mixed raw materials of the substrate 2. Next, the mixed raw materials are heated and melted, and the molten raw materials are caused to flow into a flat mold and cooled to perform molding, and the substrate 2 is finally obtained (Step S2). A melting temperature is, for example, 1500°C, and a melting time is, for example, one hour. Subsequently, a heat treatment is performed on the substrate 2 to remove distortion of the substrate 2 (Step S3). At this time, a heat treatment temperature is, for example, 760°C, and a heat treatment time is, for example, one hour. Thereafter, mirror polishing is performed on both plate faces (front and back surfaces) of the substrate 2 (Step S4).

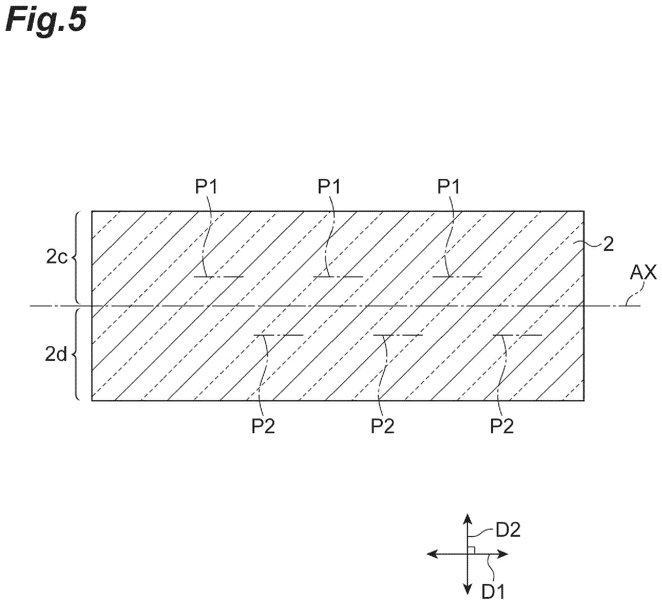

Subsequently, the multiple crystal regions 10A and the multiple crystal regions 10B are formed in the substrate 2 by irradiating a plate face of the substrate 2 with laser light having a wavelength included in an absorption wavelength of the substrate 2. Specifically, as illustrated in FIG. 5, first, a plurality of central planes P1 and a plurality of central planes P2 are set in the substrate 2. Then, the central planes P1 and P2 are sequentially irradiated with laser light (Step S5). In this step, a power density and an irradiation time of the laser light are adjusted such that each of the crystal regions 10A protrudes to the region 2d side across the virtual plane PA and each of the crystal regions 10B protrudes to the region 2c side across the virtual plane PA. A wavelength of the laser light is an arbitrary wavelength included in an absorption wavelength band (for example, a far infrared region) of a material forming the substrate 2. In this step, the power density is increased by condensing the laser light with a condenser lens, if necessary, such that a temperature of a region locally heated by the absorbed energy is 800°C or higher. As a light source of the laser light, for example, a CO₂ laser capable of outputting high-intensity far infrared light is used. When the substrate 2 is made of the SrO-TiO₂-SiO₂-based glass, a transmittance of the far infrared light (for example, CO₂ laser in a band of 10.6 µm) is about several percent. Therefore, the crystal regions 10A and 10B can be properly formed by causing the substrate 2 to absorb a large amount of laser light. Alternatively, when the substrate 2 has absorption in a band of 1 µm, for example, a Yb-doped fiber laser is used.

In addition, when it is desired to shorten a period (A in FIG. 1) of the crystal regions 10A and 10B, for example, the wavelength of the laser light is shortened and a focal length of the condenser lens is shortened. In this case, a titanium sapphire laser (Ti:S laser) may be used. A focal length of the condenser lens is, for example, 100 mm or less. Alternatively, light (second harmonic or higher-order wavelength conversion light) obtained by converting a wavelength of light output from the CO₂ laser, the Yb-doped fiber laser, or the Ti:S laser may be used. In that case, a spot diameter of the laser light can be reduced to about 10 µm or less. As a result, since the period A can be reduced to about 10 µm or less, a wavelength of the second harmonic can be shortened, and a band of wavelength conversion can be increased by creating various periodic structures.

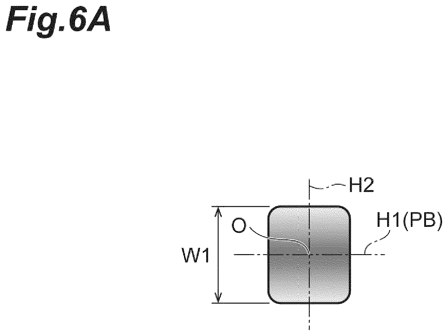

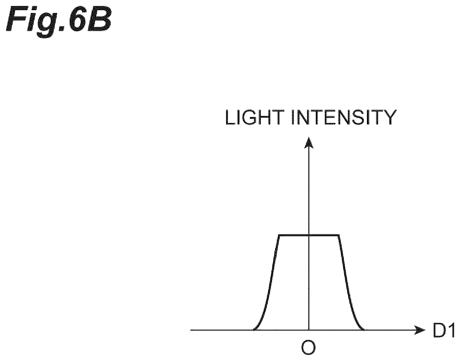

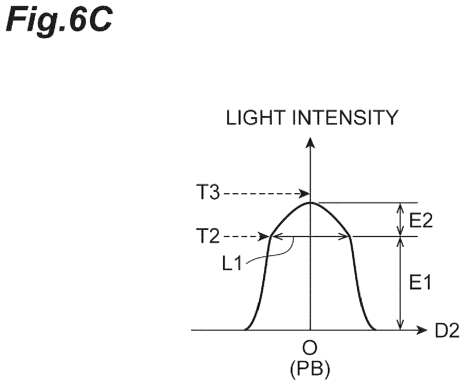

FIGS. 6A to 6C are views illustrating light intensity distributions of laser light used in Step S5. FIG. 6A illustrates a light intensity distribution in a cross section perpendicular to an optical axis of the laser light by the shade of color, where the darker the color, the higher the light intensity, and the lighter the color, the lower the light intensity. O in FIG. 6A is a central axial line (optical axis) of the laser light. In addition, FIG. 6B is a graph illustrating a light intensity distribution on a straight line HI intersecting the central axial line O and being along the optical waveguide direction D1, and FIG. 6C is a graph illustrating a light intensity distribution on a straight line H2 intersecting the central axial line O and being along the direction D2. In FIGS. 6B and 6C, a vertical axis indicates a light intensity. A horizontal axis of FIG. 6B indicates a position in the optical waveguide direction D1, and a horizontal axis of FIG. 6C indicates a position in the direction D2.

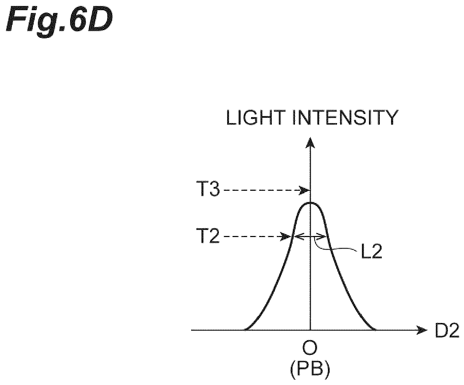

As illustrated in FIGS. 6A to 6C, in Step S5, the substrate 2 is irradiated with laser light having a light intensity distribution that gradually decreases as a distance from a reference plane PB along the central axial line O of the laser light (for example, a plane including the central axial line O and the straight line HI) increases. The distribution that gradually decreases as the distance from the reference plane PB increases is a light intensity distribution in which a unimodal distribution (E2 portion in FIG. 6C) with the reference plane PB as a peak is added to bias light (E1 portion in FIG. 6C) in a cross section perpendicular to the reference plane PB, for example, as illustrated in FIG. 6C. An inclination of this unimodal distribution is gentler than that of a Gaussian distribution having the same peak intensity illustrated in FIG. 6D. In addition, as illustrated in FIG. 6B, a light intensity on the reference plane PB is constant within a predetermined range, and a light intensity distribution on the straight line HI has a top hat shape. When the crystal regions 10A are formed in the substrate 2, the reference plane PB coincides with the central planes P1, and when the crystal regions 10B are formed in the substrate 2, the reference plane PB coincides with the central planes P2. Incidentally, a shape of the laser light in a cross section perpendicular to the central axial line O is a substantially rectangular shape or a substantially square shape, as illustrated in FIG. 6A.

In this Step S5, an optical component for converting the light intensity distribution of the laser light output from the light source described above into the light intensity distribution that gradually decreases as the distance from the reference plane PB increases may be used. By irradiating the substrate 2 with the laser light via such an optical component, the light intensity distributions illustrated in FIGS. 6A to 6C can be easily realized. Incidentally, examples of such an optical component include a diffractive optical element (DOE) or an aspheric lens.

By irradiating the substrate 2 with the laser light having the light intensity distribution as described above, the crystal regions 10A (see FIG. 2) in which the directions of the spontaneous polarizations A1 of each of the pair of portions F1 and F2 are the directions away from the central plane P1 and the crystal regions 10B (see FIG. 3) in which the directions of the spontaneous polarizations A2 of each of the pair of portions F3 and F4 are the directions away from the central plane P2 can be easily formed. The reason will be described in detail below.

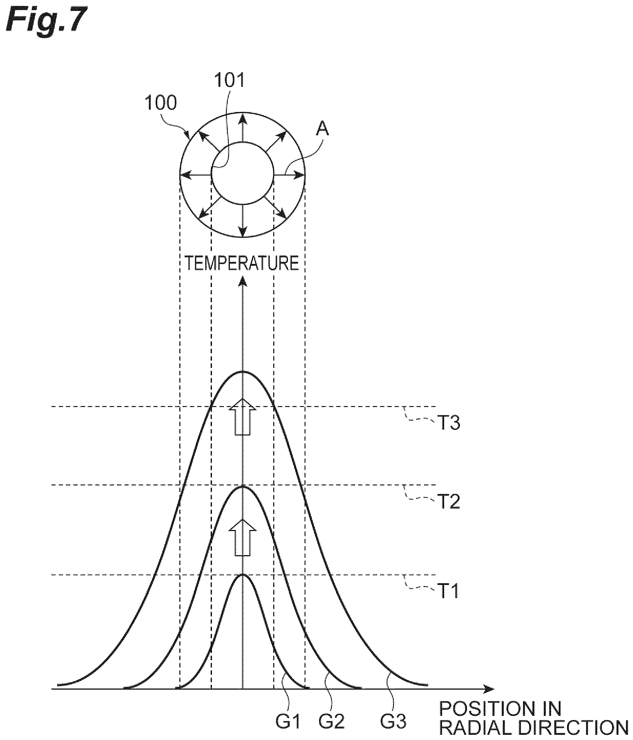

FIG. 7 is a view illustrating graphs regarding a temperature change of the substrate 2 in a case where the substrate 2 is irradiated with laser light having a distribution (for example, a Gaussian distribution symmetrical around the optical axis) in which the light intensity gradually decreases as the distance from the optical axis where the light intensity on the optical axis is the largest increases in a radial direction and an annular crystal region 100 formed by the graphs, for the purpose of explanation. Incidentally, a horizontal axis of the graphs illustrated in FIG. 7 indicates a position in the radial direction, and has the optical axis as the origin. In addition, a vertical axis of the graphs illustrated in FIG. 7 indicates a temperature. T1 is a crystal nucleation threshold, T2 is a crystal growth threshold, and T3 is a damage (melting) threshold. Usually, a relationship of T1 < T2 < T3 is established.

When the substrate 2 is irradiated with such laser light, as illustrated in graphs G1 to G3 of FIG. 7, a temperature distribution in an irradiation region is a distribution in which a temperature is the highest on the optical axis and gradually decreases as a distance from the optical axis increases in the radial direction. However, in a stage of the graph G1, only a temperature of the center of the irradiation region reaches the crystal nucleation threshold T1 and a temperature of portions other than the center of the irradiation region does not reach the crystal nucleation threshold T1, and crystal nuclei are thus generated only in the center of the irradiation region. At this time, orientations of spontaneous polarizations are random. Thereafter, when the irradiation of the laser light is continuously or intermittently repeated, the temperature distribution entirely increases, and the temperature of the center of the irradiation region reaches the crystal growth threshold T2 as illustrated in the graph G2. As a result, crystals start to grow with the crystal nuclei as starting points. At this time, the crystals grow based on the random orientations of the spontaneous polarizations. However, the crystal nuclei growing toward the center of the irradiation region collide with each other and do not grow any more. As a result, orientations toward an outer periphery, which is a region where growth is possible, become dominant. Therefore, a final orientation of the spontaneous polarizations A is mainly a direction away from the center (that is, the optical axis) of the irradiation region along the radial direction. Incidentally, thereafter, when the irradiation of the laser light is continuously or intermittently repeated, such that a temperature near the center of the irradiation region exceeds the damage threshold T3 as illustrated in the graph G3, the substrate 2 near the center is melted. Therefore, a perforation (machining mark) 101 is formed in the center of the crystal region. As a result, the annular crystal region 100 in which the spontaneous polarizations A are radially oriented is formed.

When a formation process of the crystal region described above is examined, it can be said that the orientation of the spontaneous polarizations generated in the crystal region follows an inclination direction of the light intensity distribution of the laser light. The laser light with which the substrate 2 is irradiated in Step S5 has a light intensity distribution that gradually decreases as the distance from the reference plane PB increases, as illustrated in FIG. 6C. In this case, the orientation of the spontaneous polarizations is mainly a direction away from the reference plane PB. That is, when the substrate 2 is irradiated with this laser light, the crystal nuclei are first generated in the reference plane PB and its vicinity. Thereafter, when the irradiation of the laser beam is continuously or intermittently repeated, crystals start to grow with the crystal nuclei as starting points on the reference plane PB and its vicinity. At this time, since the crystal nuclei already exist in the reference plane PB and its vicinity, a growth direction of the crystal nuclei is a direction away from the reference plane PB. Therefore, orientations of the spontaneous polarizations A1 and A2 illustrated in FIGS. 2 and 3 can be easily realized.

From the above, in FIGS. 6A to 6C described above, a width W1 of the crystal regions 10A and 10B on the straight line H2 substantially coincides with a width L1 (see FIG. 6C) of laser light having a light intensity equal to or higher than a light intensity corresponding to the crystal growth threshold T2, in the direction D2. In one example, the unimodal distribution (E2 portion in FIG. 6C) exists between the light intensity corresponding to the crystal growth threshold T2 and a light intensity corresponding to the damage threshold T3. In this case, the width L1 described above is significantly larger than a width L2 (see FIG. 6D) equal to or higher than the light intensity corresponding to the crystal growth threshold T2 in the Gaussian distribution.

In addition, a peak intensity of the laser light with which the substrate 2 is irradiated in Step S5 is set to be higher than the crystal growth threshold T2 and be lower than the damage threshold T3. In this case, formation of perforations in the centers of the crystal regions 10A and 10B is suppressed, and it is thus possible to suppress deterioration of device performance due to cracks or the like caused by the perforations.

Finally, a heat treatment is performed on the substrate 2 to remove distortion of the substrate 2 again (Step S6). At this time, a heat treatment temperature is, for example, 760°C, and a heat treatment time is, for example, one hour. The wavelength conversion optical device 1A of the present embodiment is manufactured through the above steps.

Effects obtained by the wavelength conversion optical device 1A and the method for manufacturing a wavelength conversion optical device 1A according to the present embodiment described above will be described. As described above, in the present embodiment, the portions F2 of the multiple crystal regions 10A and the portions F3 of the multiple crystal regions 10B are alternately arranged on the virtual axis AX. The direction of the spontaneous polarizations A1 in the portion F2 of the crystal region 10A is the direction away from the central plane P1 located in the region 2c. The direction of the spontaneous polarizations A2 in the portion F3 of the crystal region 10B is the direction away from the central plane P2 located in the region 2d. In addition, the central planes P1 and P2 extend along the virtual plane PA including the virtual axis AX. Therefore, polarization orientations that intersect the virtual axis AX and are opposite to each other appear alternately on the virtual axis AX. Therefore, quasi phase matching by periodically-poling can be performed on light propagating on the virtual axis AX. Incidentally, the conversion wavelength is controlled by the period A (see FIG. 1) of the crystal regions 10A and 10B.

In addition, each of the crystal regions 10A and 10B described above can be easily formed by irradiating the substrate 2 with the laser light having the wavelength included in the absorption wavelength of the substrate 2. That is, according to the wavelength conversion optical device 1A, the polarization-ordered structure for realizing quasi phase matching can be formed by a simple method. In addition, in the method for manufacturing a wavelength conversion optical device 1A described above, each of the crystal regions 10A and 10B is formed by irradiating the substrate 2 with the laser light having the wavelength included in the absorption wavelength of the substrate 2 (Step S5). At this time, the substrate 2 is irradiated with the laser light having the light intensity distribution that gradually decreases as the distance from the reference plane PB along the central axial line O of the laser light increases. In this case, as described with reference to FIG. 5, the directions of the spontaneous polarizations A1 and A2 can be easily set to the directions away from the central planes P1 and P2, respectively. That is, according to the method for manufacturing a wavelength conversion optical device 1A described above, the polarization-ordered structure for realizing quasi phase matching can be formed by a simple method.

In addition, the direction of the spontaneous polarizations A1 in the portion F2 of each crystal region 10A described above is aligned with the direction away from the central plane P1, and similarly, the direction of the spontaneous polarizations A2 in the portion F3 of each crystal region 10B is aligned with the direction away from the central plane P2. Therefore, it is easy to align the directions of the spontaneous polarizations A1 and A2 with each other in a direction orthogonal to the light waveguide direction (virtual axis AX). For example, as compared with a case where the crystal regions 100 having radial spontaneous polarizations A illustrated in FIG. 7 are arranged, the quasi phase matching by the periodically-poling can be efficiently performed.

In addition, the substrate 2 may include at least one of the fresnoite-type crystal, the BaO-TiO₂-GeO₂-SiO₂-based glass, and the SrO-TiO₂-SiO₂-based glass as in the present embodiment. For example, the above-described polarization-ordered structure can be easily formed by the irradiation of the laser light in these substrates 2. Further, when the substrate 2 includes at least one of the BaO-TiO₂-GeO₂-SiO₂-based glass and the SrO-TiO₂-SiO₂-based glass, the substrate 2 may contain, as an additive, metal included in any group of lanthanoids, actinides, and Groups 4 to 12. As a result, the absorption of the laser light in the substrate 2 can be enhanced, and the above-described polarization-ordered structure can be formed more efficiently.

In addition, a CO₂ laser, a Yb-doped fiber laser, or a Ti:S laser may be used as the light source of the laser light as in the present embodiment. Alternatively, light obtained by converting a wavelength of light output from the CO₂ laser, the Yb-doped fiber laser, or the Ti:S laser may be used as the laser light. With any one of these, the substrate can be irradiated with laser light in an infrared region included in absorption wavelengths of many materials used as a substrate material with a relatively high light intensity.

### (First Modification)

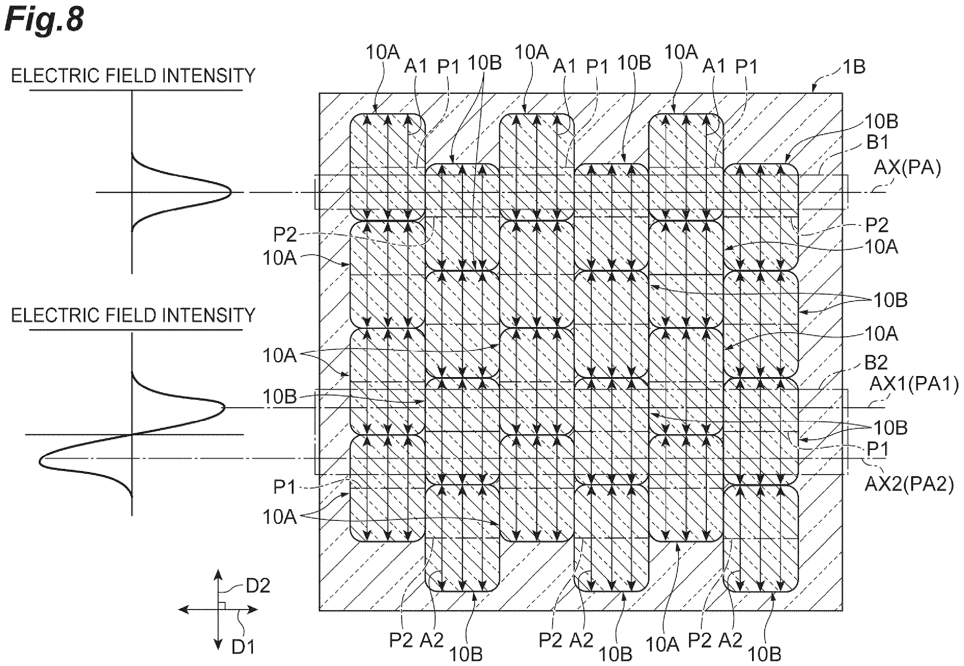

FIG. 8 is a cross-sectional view illustrating a wavelength conversion optical device 1B according to a first modification of the above-described embodiment. A difference between the present modification and the above-described embodiment is that multiple crystal regions 10A and 10B are arranged in the direction D2 that intersects the optical waveguide direction D1. In such a configuration, the same wavelength conversion region B1 as in the above-described embodiment can be formed by the crystal regions 10A and 10B located on both sides of a certain virtual plane PA. In addition, the wavelength conversion region B2 can be formed by the crystal regions 10A and 10B located on both sides of one virtual plane PA1 and the crystal regions 10B and 10A located on both sides of a virtual plane PA2 adjacent to the virtual plane PA1 (the crystal region 10B is common with that on the side of the virtual plane PA1). That is, the wavelength conversion region B2 is a region including two virtual axes AX1 and AX2 and extending along the optical waveguide direction D1. A width of the wavelength conversion region B2 in the direction D2 may be the same as a period of central planes P1 and P2 in the direction D2 or may be smaller than the period of the central planes P1 and P2 in the direction D2.

FIG. 8 illustrates graphs of electric field distributions where wavelength conversion can be effectively performed in the wavelength conversion regions B1 and B2, respectively. A horizontal axis of each graph of FIG. 8 indicates an electric field intensity, and a vertical axis of each graph of FIG. 8 indicates a position in the direction D2. As illustrated in a graph on the left of FIG. 8, in the wavelength conversion region B1, the electric field intensity distribution is in an LP01 mode (fundamental mode). On the other hand, as illustrated in a graph on the right of FIG. 8, in the wavelength conversion region B2, the electric field intensity distribution is in an LP11 mode. Even in such an electric field mode, the wavelength conversion can be suitably performed. Incidentally, the electric field intensity distribution is in the LP11 mode before and after the wavelength conversion in the wavelength conversion region B2.

### (Second Modification)

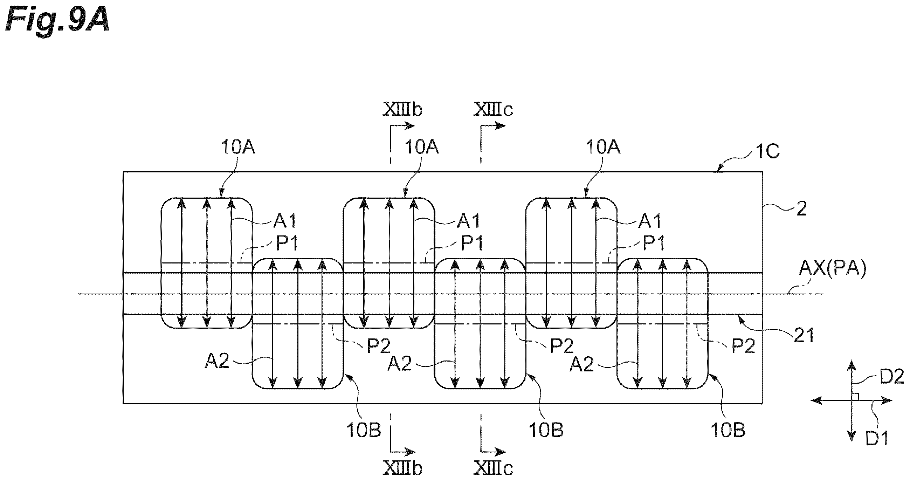

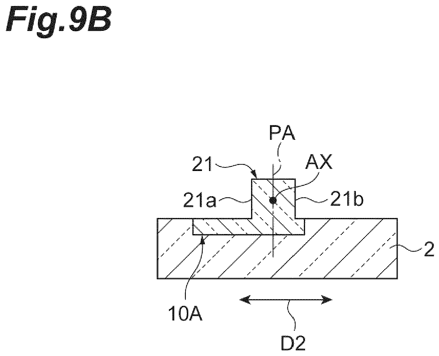

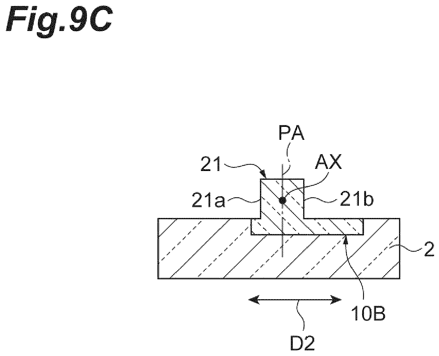

FIG. 9A is a plan view illustrating a configuration of a wavelength conversion optical device 1C according to a second modification of the above-described embodiment. FIG. 9B is a cross-sectional view taken along line XIIIb-XIIIb of FIG. 9A, and illustrates a cross section of a crystal region 10A that intersects a virtual axis AX. FIG. 9C is a cross-sectional view taken along line XIIIc-XIIIc of FIG. 9A, and illustrates a cross section of a crystal region 10B that intersects the virtual axis AX. In the wavelength conversion optical device 1C according to the present modification, the substrate 2 has a channel optical waveguide structure 21 having the virtual axis AX as an optical axis. The channel optical waveguide structure 21 has a pair of side faces 21a and 21b extending along the virtual axis AX. In one example, one side face 21a is located between the virtual plane PA and the central plane P1 and the other side face 21b is located between the virtual plane PA and the central plane P2, when viewed from a direction perpendicular to the substrate 2. The side faces 21a and 21b can be easily formed by removing a portion of the substrate 2 located outside the channel optical waveguide structure 21 is removed by dry etching before or after, for example, Step S5 illustrated in FIG. 4. Incidentally, a relationship between a refractive index n1 of a crystallized region and a refractive index n2 of an amorphous region is n1 > n2. Light is confined also in a depth direction of the substrate of FIGS. 9B and 9C.

As in the present modification, in the wavelength conversion optical device, the substrate 2 may have the channel optical waveguide structure 21 having the virtual axis AX as the optical axis. In addition, a method for manufacturing the wavelength conversion optical device may further include a step of forming the channel optical waveguide structure 21 in the substrate 2. As a result, the light propagation efficiency on the virtual axis AX (wavelength conversion region B1) can be enhanced.

Incidentally, as a method for forming the channel optical waveguide structure in the substrate 2, various methods other than the above method are conceivable. Examples thereof include a method of cutting the substrate 2 with a dicing saw while leaving a portion which is to serve as a channel optical waveguide structure, a method of partially changing a refractive index by diffusing an additive such as Ge and Ti into the substrate 2, and the like.

### (Third Modification)

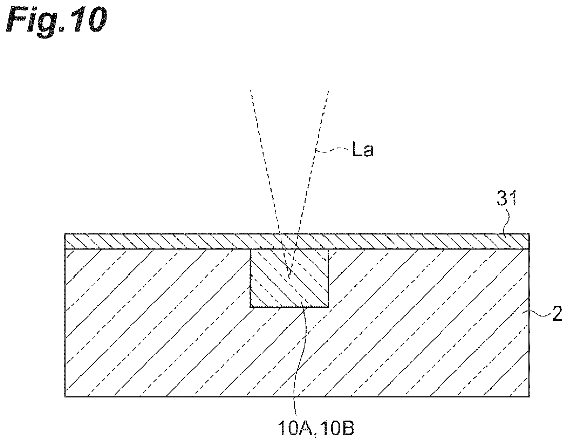

FIG. 10 is a cross-sectional view illustrating one step of a method for manufacturing a wavelength conversion optical device according to a third modification of the above-described embodiment, and illustrates a cross section of the substrate 2 which intersects the optical waveguide direction D1. In the present modification, the substrate is irradiated with laser light La in a state where a light-absorbing material 31 is arranged on a surface of the substrate 2 in Step S5 illustrated in FIG. 4. The light-absorbing material 31 includes a material having an absorption band in a band including a wavelength of the laser light La. A method of arranging the light-absorbing material 31 on the surface of the substrate 2 includes coating, sputtering, vapor deposition or the like. For example, the light-absorbing material 31 is made of a material containing carbon, and is a carbon paste (a conductive paste obtained by adding carbon particles as a filler to resin) in one example.

According to the method of the present modification, the absorption of the laser light La in the substrate 2 can be enhanced, and the above-described polarization-ordered structure can be formed more efficiently. In addition, a carbon paste may be used as the light-absorbing material 31 in this case. As a result, the light-absorbing material 31 that efficiently absorbs the laser light can be easily arranged on the substrate 2. In addition, the carbon paste has a wide absorption band, and thus, can absorb light in a wavelength band oscillated by a fiber laser, a solid-state laser, or a semiconductor laser other than the CO₂ laser. Further, the carbon paste can be easily removed by washing or the like after the laser light irradiation.

Incidentally, various methods other than the above method are conceivable as a method of enhancing the absorption efficiency of the laser light. For example, there is a method of increasing a light absorption rate of the substrate 2 in advance by a reduction reaction before laser light irradiation, and restoring the light absorption rate by an oxidation reaction after the laser light irradiation.

The wavelength conversion optical device according to the present disclosure is not limited to the above-described embodiments, and various other modifications can be made. For example, the embodiments and the respective modifications described above may be combined with each other in accordance with necessary purposes and effects. In addition, the fresnoite-type crystal, the BaO-TiO₂-GeO₂-SiO₂-based glass, and the SrO-TiO₂-SiO₂-based glass have been exemplified as the substrate material in the above-described embodiment. However, the substrate used in the present disclosure can be made of various materials that are crystalline or amorphous and transparent to a desired wavelength. In addition, the crystal regions 10A and 10B illustrated in the above-described embodiment do not have perforations formed by melting the substrate 2. However, the first and second crystal regions of the present disclosure may also have perforations. In addition, the central planes P1 and P2 of the crystal regions 10A and 10B have been described as examples of the first and second planes, respectively, in the above-described embodiment, but the position of each of the first and second planes of the present disclosure may be deviated from the center of each of the first and second crystal regions in the direction D2.

### Reference Signs List

- 1A, 1B, 1C: wavelength conversion optical device
- 2: substrate
- 2a, 2b: end face
- 2c, 2d: region
- 10A, 10B: crystal region
- 21: channel optical waveguide structure
- 21a, 21b: side face
- 31: light-absorbing material
- A, A1, A2: spontaneous polarization
- AX, AX1, AX2: virtual axis
- B1, B2: wavelength conversion region
- B1a: one end
- B1b: other end
- D1: optical waveguide direction
- D2: direction
- F1 to F4: portion
- La: laser light
- O: central axial line
- P1, P2: central plane
- PA, PA1, PA2: virtual plane
- PB: reference plane
- T1: crystal nucleation threshold
- T2: crystal growth threshold
- T3: damage threshold
- Λ: period

## Claims

1. A wavelength conversion optical device comprising:
a substrate having a virtual plane including a virtual axis and first and second regions facing each other with the virtual plane interposed therebetween and including multiple first crystal regions and multiple second crystal regions alternately arranged on the virtual axis,
wherein each of the multiple first crystal regions includes a pair of portions arranged in a direction intersecting a first plane with the first plane interposed therebetween, the first plane being located in the first region and being parallel to the virtual plane, and directions of spontaneous polarizations of each of the pair of portions being directions away from the first plane, and
each of the multiple second crystal regions includes a pair of portions arranged in a direction intersecting a second plane with the second plane interposed therebetween, the second plane being located in the second region and being parallel to the virtual plane, and directions of spontaneous polarizations of each of the pair of portions being directions away from the second plane.

2. The wavelength conversion optical device according to claim 1, wherein
the substrate has a channel optical waveguide structure having the virtual axis as an optical axis.

3. The wavelength conversion optical device according to claim 1 or 2, wherein
the substrate includes at least one of a fresnoite-type crystal, a BaO-TiO₂-GeO₂-SiO₂-based glass, and a SrO-TiO₂-SiO₂-based glass.

4. The wavelength conversion optical device according to claim 3, wherein
the substrate includes at least one of a BaO-TiO₂-GeO₂-SiO₂-based glass and a SrO-TiO₂-SiO₂-based glass, and contains metal included in any group of lanthanoids, actinides, and Groups 4 to 12 as an additive.

5. A method for manufacturing a wavelength conversion optical device, comprising:
a first step of forming multiple first crystal regions by irradiating a substrate with laser light, the substrate having a virtual plane including a virtual axis and first and second regions facing each other with the virtual plane interposed therebetween, the laser light having a wavelength included in an absorption wavelength band of the substrate and having a light intensity distribution that gradually decreases as a distance from a plane including a central axial line of the laser light increases, the multiple first crystal regions each including a pair of portions arranged in a direction intersecting a first plane with the first plane interposed therebetween, the first plane being in the first region and being parallel to the virtual plane, and directions of spontaneous polarizations of each of the pair of portions being directions away from the first plane; and
a second step of forming multiple second crystal regions by irradiating the substrate with the laser light, the multiple second crystal regions each including a pair of portions arranged in a direction intersecting a second plane with the second plane interposed therebetween, the second plane being in the second region and being parallel to the virtual plane, and directions of spontaneous polarizations of each of the pair of portions being directions away from the second plane,
wherein the multiple first crystal regions and the multiple second crystal regions are alternately formed on the virtual axis.

6. The method for manufacturing a wavelength conversion optical device according to claim 5, further comprising
a step of forming a channel optical waveguide structure having the virtual axis as an optical axis on the substrate, before or after the first step and the second step.

7. The method for manufacturing a wavelength conversion optical device according to claim 6, wherein
the channel optical waveguide structure is formed by a dicing saw or dry etching.

8. The method for manufacturing a wavelength conversion optical device according to any one of claims 5 to 7, wherein
a CO₂ laser, a Yb-doped fiber laser, or a Ti:S laser is used as a light source of the laser light.

9. The method for manufacturing a wavelength conversion optical device according to any one of claims 5 to 7, wherein
light obtained by converting a wavelength of light output from a CO₂ laser, a Yb-doped fiber laser, or a Ti:S laser is used as the laser light.

10. The method for manufacturing a wavelength conversion optical device according to any one of claims 5 to 9, wherein
a light-absorbing material is arranged on a surface of the substrate and the substrate is irradiated with the laser light.

11. The method for manufacturing a wavelength conversion optical device according to claim 10, wherein
the light-absorbing material is a carbon paste.

12. The method for manufacturing a wavelength conversion optical device according to any one of claims 5 to 11, wherein
the substrate is irradiated with the laser light through an optical component converting a light intensity distribution of the laser light into the light intensity distribution that gradually decreases as the distance from the plane including the central axial line of the laser light increases.

13. The method for manufacturing a wavelength conversion optical device according to claim 12, wherein
the optical component is a diffractive optical element or an aspheric lens.
